# EUROPÄISCHE PATENTSCHRIFT

(11) **EP 3 277 756 B1**
(45) Veröffentlichungstag und Bekanntmachung des Hinweises auf die Patenterteilung: **30.10.2019**
(21) Anmeldenummer: 15805288.6
(22) Anmeldetag: 09.11.2015
(51) Int. Cl.: C09D 5/00

(54) **BESCHICHTUNGSZUSAMMENSETZUNG SOWIE DARAUS HERGESTELLTE LACKIERUNG**
COATING COMPOSITION AND PAINT PRODUCED FROM SAME
COMPOSITION DE REVÊTEMENT ET MISES EN PEINTURE RÉALISÉES AU MOYEN DE LADITE COMPOSITION

(30) Priorität: 02.04.2015 DE 202015101656 U
(43) Veröffentlichungstag der Anmeldung: 07.02.2018
(73) Patentinhaber: Bollig & Kemper GmbH & Co. KG, 50827 Köln (DE)
(72) Erfinder: ROLAND, Jean-Francois, 38320 Brié et Angonne (FR)
(74) Vertreter: RCD Patent Giesen, Schmelcher & Griebel Patentwanwälte PartG mbB
(86) Internationale Anmeldenummer: PCT/IB2015/058642
(87) Internationale Veröffentlichungsnummer: WO 2016/156953

(56) Entgegenhaltungen:
- EP-A1- 1 226 976
- EP-A1- 2 821 446
- WO-A1-2012/065828
- WO-A2-2009/101320

## Beschreibung

Die Erfindung betrifft Beschichtungszusammensetzungen für die Automobilindustrie. Insbesondere betrifft die Erfindung Beschichtungszusammensetzungen zur Herstellung mattierter Klarlacke.

Seit einigen Jahren werden im Bereich der Automobillackierung neben glänzenden Lacken vermehrt auch matte Oberflächen gewünscht, beispielsweise für Automobillackierungen in matten Silber-, Schwarz- oder Blautönen. Hierbei werden matte Oberflächen im Allgemeinen durch Zusatz von Mattierungsmitteln zu den Klarlacken erzielt. Geeignete Mattierungsmittel in Klarlacksystemen können sowohl organisch als auch anorganisch sein. Organische Mattierungsmittel sind beispielsweise auf Basis von Kautschuk und/oder Wachsen erhältlich. Anorganische Mattierungsmittel auf Basis von Silikaten sind im Handel erhältlich und weit verbreitet. Silikat-basierte Mattierungsmittel auf Basis von pyrogener Kieselsäure, von Fällungskieselsäure oder auf Basis von Kieselgel sind verwendbar. Die Mattierungsmittel können ggf. noch oberflächenmodifiziert sein, wobei zur Modifizierung verschiedene organische Komponenten wie harte, mikrokristalline Wachse, plastifizierende, mikrokristalline Wachse und/oder Polyethylenwachse und/oder anorganische Komponenten, wie Polysiloxane, eingesetzt werden.

Die WO 2009/101320 A2 beschreibt nicht-sphärische, irreguläre Polyamid-Partikel in Pulverform und deren allgemeine Verwendung, vornehmlich in der Kosmetikindustrie als Kompaktierungsmittel oder auch als Mattierungsmittel.

Aus der EP 2 821 446 A1 sind matte Beschichtungen vornehmlich für Holzsubstrate mit einem niedrigen Glanzgrad beschrieben, die ein spezielles Bindemittel und einen Vernetzer umfassen. Das Bindemittel ist ein lineares Polymer mit wenigen reaktiven Gruppen zur Vernetzung und wird kombiniert mit einem Mix von speziellen Vernetzern unterschiedlicher Reaktivität. Es wird ein Siliziumdioxid-Mattierungsmittel eingesetzt.

Aus der EP 1 226 976 A1 ist eine Druckplattenbasis für den Lithographiedruck bekannt, welche ein spezielles hydrophiles Polymer mit Silan-Kopplungsgruppen zur Anbindung von anorganischen Partikeln umfasst. Die anorganischen Partikel können oberflächenmodifizierte Siliziumdioxid-Partikel sein.

Mattierungsmittel auf Kieselgel- oder Säure-Basis mit und ohne Oberflächenmodifizierung und deren Verwendung in Beschichtungsmitteln zur Herstellung von Lacken für die Automobilindustrie mit einer matten Oberfläche sind beschrieben. Aus der WO 2012/065828 ist beispielsweise ein Beschichtungsmittel auf Basis organischer Lösemittel bekannt, enthaltend mindestens eine hydroxylgruppenhaltige Verbindung (A), mindestens ein Vernetzungsmittel (B) mit gegenüber Hydroxylgruppen reaktiven Gruppen und mindestens ein Mattierungsmittel (M) auf Kieselgel-Basis, wobei das Mattierungsmittel auf Kieselgel-Basis mit einem oder mehreren Wachsen oberflächenmodifiziert ist, und das Beschichtungsmittel zusätzlich mindestens ein Rheologiehilfsmittel auf Basis hydrophober Kieselsäure enthält. Das verwendete Mattierungsmittel und dessen Teilchengröße definieren die Mattierungswirkung und Glätte der Oberfläche. Nachteilig bei bekannten Beschichtungsmitteln ist insbesondere, dass bei der Wirkung der Mattierungsmittel Grenzen erreicht werden und diese häufig nicht zur gewünschten Reduzierung des Glanzgrades führen.

Der vorliegenden Erfindung lag daher die Aufgabe zugrunde, ein Beschichtungsmittel zur Verfügung zu stellen, das einen niedrigen Glanzgrad der gehärteten Beschichtung zur Folge hat.

Diese Aufgabe wird gelöst durch eine Beschichtungszusammensetzung zur Herstellung mattierter Klarlacke für die Automobilindustrie auf Basis organischer Lösemittel oder wasserbasiert, enthaltend mindestens ein Bindemittel (A), optional mindestens ein Vernetzungsmittel (B), und mindestens ein Mattierungsmittel (M) auf Siliciumdioxid (SiO₂)-Basis, wobei die Beschichtungszusammensetzung eine Kombination a) eines mit einem oder mehreren Wachsen oberflächenmodifizierten Mattierungsmittels auf Siliciumdioxid (SiO₂)-Basis, und b) eines organischen Mattierungsmittels auf Harnstoff-Methanal Polymer-Basis enthält, und c) Polyamid-Partikel.

Überraschend wurde gefunden, dass eine Kombination eines anorganischen mit Wachs oberflächenmodifizierten Mattierungsmittels auf Siliciumdioxid (SiO₂)-Basis und eines organischen Mattierungsmittels in Verbindung mit der Verwendung von Polyamid-Partikeln in einem Beschichtungsmittel zu Klarlacken mit sehr niedriger Glanzzahl führt. So konnte ein Glanzgrad der gehärteten Beschichtung mit einer Strukturierung in einem Bereich von 30 µm bis 60 µm im Bereich von 2 bis 15 Glanzeinheiten, gemessen in einem Winkel von 60° mit einem handelsüblichen Glanzgerät, erzielt werden.

Durch die erfindungsgemäße Beschichtungszusammensetzung lassen sich geringe und mittlere Glanzeffekte auch bei mehrschichtigen Lackierungen gezielt einstellen. Die erfindungsgemäße Beschichtungszusammensetzung ist für Klarlacke mit geringem Glanz für opake, metallische oder perlmuttartige Schattierungen verwendbar. Gerade auf dem Gebiet der ästhetisch anspruchsvollen Automobillackierung ist es von besonderem Vorteil, wenn Beschichtungen erhalten werden, deren Glanzgrad gezielt einstellbar ist. In vorteilhafter Weise sind ein gutes Erscheinungsbild, Anhaftung und Beständigkeit gegen Abblättern der gehärteten Beschichtung in Zwei- und Dreischicht-Beschichtungsverfahren mit einem Einbrennvorgang erzielbar. Die Komponenten der Beschichtungszusammensetzung erlauben eine Verwendung für 1K, 2K, lösemittelhaltige und wasser-basierte Beschichtungen. Weiterhin benötigt die erfindungsgemäße Beschichtungszusammensetzung keine speziellen Vorkehrungen der Aufbringung sondern ist in Standardprozessen der Lackapplikation in der Automobillackierung verwendbar.

Geeignete Mattierungsmittel auf Siliciumdioxid (SiO₂)-Basis sind vorzugsweise Mattierungsmittel auf Basis von Kieselsäure insbesondere pyrogener Kieselsäure oder Fällungskieselsäure oder auf Basis von Kieselgel sind verwendbar. In bevorzugten Ausführungsformen ist das Mattierungsmittel auf Siliciumdioxid (SiO₂)-Basis ein Mattierungsmittel auf Kieselsäure-Basis, insbesondere auf Basis gefällter Kieselsäure. Jedoch sind ebenfalls Mattierungsmittel auf Basis von Kieselgel verwendbar.

Die Mattierungsmittel sind mit einem oder mehreren Wachsen oberflächenmodifiziert. Im Sinn der vorliegenden Erfindung werden unter "Wachs" alle natürlichen und künstlich gewonnenen Stoffe verstanden, die folgende Eigenschaften aufweisen: 1. Bei 20°C knetbar, fest bis brüchig hart; 2. Grob- bis feinkristallin, durchscheinend bis opak, jedoch nicht glasartig; 3. Oberhalb 40°C ohne Zersetzung schmelzend; 4. Schon wenig oberhalb des Schmelzpunktes verhältnismäßig niedrigviskos; 5. Stark temperaturabhängig in Konsistenz und Löslichkeit; 6. Unter leichtem Druck polierbar. Erfüllt ein Stoff mehr als eine dieser Eigenschaften nicht, ist er kein "Wachs" mehr im Sinne dieser Erfindung. Die Wachse können modifiziert und/oder unmodifiziert sein. Geeignet sind alle an sich bekannten und üblichen Wachse, wobei bevorzugt synthetische Wachse eingesetzt werden. Die Wachse haben gewöhnlich ein zahlenmittleres Molekulargewicht zwischen 100 und 10.000, bevorzugt zwischen 300 und 1200 und vorzugsweise Tropfpunkte zwischen 50 und 180°C, bevorzugt zwischen 60 und 120°C.

Bevorzugt werden Mattierungsmittel (M) auf Kieselsäure-Basis eingesetzt, die mit einem oder mit mehreren verschiedenen ggf. modifizierten Polyolefinwachsen, wie Polyethylen- und Polypropylenwachse, Polyethylenglykolwachse, modifiziert sind. Besonders bevorzugt werden Mattierungsmittel (M) auf Kieselsäure-Basis eingesetzt, die mit einem oder mit mehreren verschiedenen Polyolefinwachsen, insbesondere mit einem oder mit mehreren verschiedenen linearen unverzweigten Polyolefinwachsen und ganz besonders bevorzugt mit einem oder mit mehreren verschiedenen Polyethylenwachsen, modifiziert sind. Der Wachsgehalt kann zwischen 3 und 20 Gew.-%, bevorzugt zwischen 5 und 15 Gew.-%, jeweils bezogen auf das Gesamtgewicht des Mattierungsmittels, betragen.

Die in dem Beschichtungsmittel eingesetzten Mattierungsmittel auf Siliciumdioxid (SiO₂)-Basis können eine mittlere Teilchengröße im Bereich von ≥ 4 µm bis ≤ 7 µm aufweisen. Die mittlere Teilchengröße angegeben als sogenannter d50-Wert (d.h. dass 50 Volumenprozent der Teilchen eine Teilchengröße unter der angegebenen mittleren Teilchengröße aufweisen) wird dabei entsprechend der Norm für Laserbeugungsmessungen ISO 13320-1 bestimmt. Geeignete Mattierungsmittel auf Kieselsäure-Basis mit Wachs-Nachbehandlung sind im Handel bei der Firma Degussa AG unter der Bezeichnung Acematt® OK 412, mit einem d50-Wert (bestimmt durch Laserbeugung in Anlehnung an ISO 13320-1) von 6,0 µm oder Acematt® OK 607, einer feinteiligen Fällungskieselsäure mit einem d50-Wert (bestimmt durch Laserbeugung in Anlehnung an ISO 13320-1) von 4,4 bis 4,5 µm erhältlich. Feinteilige Mattierungsmittel ermöglichen den Einsatz in Anwendungen für, bei denen niedrige Trockenfilmschichten appliziert oder besonders glatte Oberflächen realisiert werden sollen.

In bevorzugten Ausführungsformen der Beschichtungszusammensetzung ist das Mattierungsmittel auf Siliciumdioxid (SiO₂)-Basis in einem Bereich von ≥ 1 Gew.-% bis ≤ 5 Gew.-%, bezogen auf das Gesamtgewicht der Beschichtungszusammensetzung, enthalten.

Weiterhin enthält die Beschichtungszusammensetzung ein organisches Mattierungsmittel auf Basis eines Harnstoff-Methanal Polymers. Harnstoff-Methanal Polymere bilden insbesondere duroplastische (Duromere) Kunststoffe aus. In bevorzugten Ausführungsformen ist das organische Mattierungsmittel auf Harnstoff-Methanal Polymer-Basis ein Methylendiaminomethylether-Polykondensat.

Die Mattierungsmittel auf Basis eines Harnstoff-Methanal Polymers können eine mittlere Teilchengröße im Bereich von ≥ 5 µm bis ≤ 7 µm, angegeben als sogenannter d50-Wert, aufweisen. Derartige organische Mattierungsmittel sind beispielsweise erhältlich von der Fa. Deuteron GmbH unter der Marke Deuteron® MK. Diese sind als Mattierungsmittel für wässrige und lösemittelhaltige Lacksysteme verwendbar. In bevorzugten Ausführungsformen enthält die Beschichtungszusammensetzung das organische Mattierungsmittel auf Harnstoff-Methanal Polymer-Basis in einem Bereich von ≥ 1 Gew.-% bis ≤ 7 Gew.-%, bezogen auf das Gesamtgewicht der Beschichtungszusammensetzung.

Weiterhin enthält die Beschichtungszusammensetzung Polyamid-Partikel. Bevorzugte Polyamid-Partikel sind optisch transparente Polyamide. Geeignete Polyamide (PA) können Polykondensationsprodukte von Diaminen und Dicarbonsäuren, z.B. Adipinsäure und Hexamethylendiamin, oder von Aminosäuren, z. B. Aminoundecansäure, sein oder durch ringöffnende Polymerisation von Lactamen, z. B. Caprolactam oder Laurinlactam, hergestellt werden. Verwendbar sind beispielsweise mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3-,3-Dimethyl-4,4-bis(aminocyclohexyl)-methans, aus Laurinlactam, Isophthalsäure und dem Isomerengemisch des 3-,3-Dimethyl-4,4-bis(aminocyclohexyl)-methans oder aus Tetradecandisäure und dem Isomerengemisch des 3-,3-Dimethyl-4,4-bis(aminocyclohexyl)-methans.

Die Polyamid-Partikel können eine mittlere Teilchengröße im Bereich von ≥ 20 µm bis ≤ 60 µm, angegeben als sogenannter d50-Wert, aufweisen. Vorzugsweise weisen die Polyamid-Partikel eine mittlere Teilchengröße im Bereich von ≥ 40 µm bis ≤ 46 µm, oder ≥ 43 µm bis ≤ 55 µm, angegeben als sogenannter d50-Wert, auf. Derartige optisch transparente Polyamide sind beispielsweise unter dem Handelsnamen Rilsan® insbesondere Rilsan® D50 und Rilsan® D60 bei der Fa. Arkema, Frankreich erhältlich. In bevorzugten Ausführungsformen enthält die Beschichtungszusammensetzung die Polyamid-Partikel in einem Bereich von ≥ 3 Gew.-% bis ≤ 12 Gew.-%, bezogen auf das Gesamtgewicht der Beschichtungszusammensetzung,

Die Beschichtungszusammensetzung enthält mindestens ein Bindemittel (A) und optional mindestens ein Vernetzungsmittel (B).

Das Bindemittel kann physikalisch, thermisch oder thermisch und mit aktinischer Strahlung härtbar sein. In der Fachwelt wird die Härtung mit Hitze und aktinischer Strahlung auch kurz als Dual-Cure bezeichnet.

Das Bindemittel kann physikalisch härtend sein. Im Rahmen der vorliegenden Erfindung bezeichnet der Begriff "physikalische Härtung" die Härtung einer Schicht aus einer Beschichtungszusammensetzung durch Verfilmung durch Lösemittelabgabe aus der Beschichtungszusammensetzung, wobei die Verknüpfung innerhalb der Beschichtung über Schlaufenbildung der Polymermoleküle der Bindemittel (zu dem Begriff vgl. Römpp Lexikon Lacke und Druckfarben, Seiten 73 und 74, Stichwort "Bindemittel") erfolgt. Alternativ erfolgt die Filmbildung über die Koaleszenz von Bindemittelteilchen (vgl. Römpp Lexikon Lacke und Druckfarben, Seiten 274 und 275, Stichwort "Härtung"). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Das Bindemittel kann thermisch härtbar sein. Hierbei kann das Bindemittel fremdvernetzend oder selbstvernetzend sein, insbesondere fremdvernetzend. Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind, oder das Bindemittel enthält reaktive funktionelle Gruppen, die "mit sich selbst" reagieren können. Als fremdvernetzend werden dagegen solche Bindemittel bezeichnet, worin die eine Art der komplementären reaktiven funktionellen Gruppen in dem Bindemittel, und die andere Art in einem Vernetzungsmittel vorliegen. Ergänzend wird hierzu auf Römpp Lexikon Lacke und Druckfarben, Georg Thieme Verlag, Stuttgart, New York, 1998, "Härtung", Seiten 274 bis 276, insbesondere Seite 275, unten, verwiesen.

Das Bindemittel der Beschichtungszusammensetzung kann eine oligomere oder polymere Verbindung sein. Unter Oligomeren werden Verbindungen verstanden, die wenigstens 2 bis 15 wiederkehrende Monomereinheiten enthalten. Im Rahmen der vorliegenden Erfindung werden unter Polymeren Verbindungen verstanden, welche wenigstens 10 wiederkehrende Monomereinheiten enthalten. Ergänzend wird auf Römpp Lexikon Lacke und Druckfarben, Georg Thieme Verlag, Stuttgart, New York, 1998, Seite 425, "Oligomere", verwiesen. Beispiele für geeignete Bindemittel sind beispielsweise statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze geeignet. Zu diesen Begriffen wird ergänzend auf Römpp Lexikon Lacke und Druckfarben, Georg Thieme Verlag, Stuttgart, New York, 1998, Seite 457, "Polyaddition" und "Polyadditionsharze (Polyaddukte)", sowie Seiten 463 und 464, "Polykondensate", "Polykondensation" und "Polykondensationsharze", sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate, vorzugsweise polyurethan-modifizierte (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharze, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester und Polyurethane.

Vorzugsweise sind Bindemittel verwendbar, die Carboxylgruppen enthalten und bevorzugt eine Säurezahl von 10 bis 100 mg KOH/g Bindemittel, mehr bevorzugt von 40 bis 80 mg KOH/g Bindemittel. Es ist weiter bevorzugt, dass diese Bindemittel ein Molekulargewicht von 500 bis 5.000 g/mol aufweisen. Weiterhin vorzugsweise sind Bindemittel verwendbar, die Urethangruppen und/oder Harnstoffgruppen enthalten.

In einer bevorzugten Ausführungsform der Beschichtungszusammensetzung ist das Bindemittel ausgewählt aus der Gruppe umfassend Polyacrylate, Polyurethane, Polycarbonate, Polyester, Nitrocellulose, Alkyde, Aminoplaste, Polyepoxide, Polyvinyl, Polyisocyanate, und deren Mischungen.

Als Lösemittel für die Beschichtungszusammensetzung sind insbesondere solche geeignet, die im Beschichtungsmittel chemisch inert gegenüber den Verbindungen (A) und (B) sind und die auch bei der Härtung der Beschichtungszusammensetzung nicht mit (A) und (B) reagieren. Beispiele für solche Lösemittel sind aprotische Lösemittel, wie beispielsweise aliphatische und/oder aromatische Kohlenwasserstoffe wie Toluol, Xylol, Solventnaphtha(R), Solvesso 100 oder Hydrosol® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln.

Neben dem Bindemittel (A), Vernetzungsmittel (B), Mattierungsmitteln (M) auf Siliciumdioxid (SiO₂)-Basis und auf Basis eines Harnstoff-Methanal Polymers und den Polyamid-Partikeln kann die Beschichtungszusammensetzung weitere Bindemittel und/oder Vernetzungsmittel, sowie übliche und bekannte Lackadditive wie Katalysatoren, Lichtschutzmittel wie HALS-Verbindungen, Haftvermittler, Verlaufsmittel, filmbildende Hilfsmittel rheologiesteuernde Additive, Flammschutzmittel Pigmente und/oder Füllstoffe in wirksamen Mengen enthalten.

Ein weiterer Gegenstand der Erfindung betrifft eine Beschichtung hergestellt durch Härtung einer erfindungsgemäßen Beschichtungszusammensetzung. In Ausführungsformen weist die gehärtete Beschichtung eine Schichtdicke in einem Bereich von ≥ 45 µm bis ≤ 60 µm auf. Es ist hierbei besonders bevorzugt, dass die Schichtdicke der gehärteten Beschichtung geringer ist als die Strukturierung.

Vorteilhafterweise können auf diese Weise Lacksysteme mit sehr geringen Glanzzahlen erzielt werden, die der Karosserie dennoch ein neues und elegantes Aussehen verleihen.

Die aus der Beschichtungszusammensetzung herstellbaren Beschichtungen zeigen auch auf bereits ausgehärteten Elektrotauchlackierungen, Füllerlackierungen, Basislackierungen oder üblichen und bekannten Klarlackierungen ein gutes Erscheinungsbild, hervorragende Haftung und geringes Abblättern. Daher sind diese neben dem Einsatz in der Automobilserien(OEM)lackierung auch für Autoreparaturlackierung geeignet.

Die Applikation kann durch übliche Applikationsmethoden, wie z.B. Spritzen, Rakeln, Streichen, Gießen, Tauchen, Tränken, Träufeln oder Walzen insbesondere Spritzapplikationsmethoden erfolgen. Die thermische Härtung der Beschichtungszusammensetzung weist keine methodischen Besonderheiten auf, sondern erfolgt nach den üblichen und bekannten Methoden wie Erhitzen in einem Umluftofen oder Bestrahlen mit IR-Lampen. Die Beschichtungszusammensetzung führt bei Härtung bei niedrigen Temperaturen wie sie im Bereich der Automobillackierung insbesondere auch in Zwei- und Dreischicht-Beschichtungsverfahren mit einem Einbrennvorgang üblich sind, zu Beschichtungen mit einer sehr guten optischen Qualität.

Ein weiterer Gegenstand der Erfindung betrifft entsprechend einen Klarlack für die Automobilserien-, Nutzfahrzeug- und/oder Reparaturlackierung und/oder zur Beschichtung von Karosserieinnen- und/oder -Außenbauteilen hergestellt durch Beschichtung mit der erfindungsgemäßen Beschichtungszusammensetzung. In Ausführungsformen weist der Klarlack eine Schichtdicke in einem Bereich von ≥ 45 µm bis ≤ 60 µm auf. Es ist hierbei besonders bevorzugt, dass die Schichtdicke des Klarlacks geringer ist als die Strukturierung.

Die Beschichtungszusammensetzungen stellen gehärtete Beschichtungen, insbesondere Lackierungen, speziell Klarlackierungen mit einer matten Oberfläche mit überraschend geringer Glanzzahl zur Verfügung. So konnte ein Glanzgrad der gehärteten Beschichtung mit einer Strukturierung in einem Bereich von 30 µm bis 60 µm im Bereich von 2 bis 15 Glanzeinheiten, gemessen in einem Winkel von 60° mit einem handelsüblichen Glanzgerät, erzielt werden. Hierbei sind Klarlacke mit geringem Glanz für opake, metallische oder perlmuttartige Schattierungen erzielbar.

Hierbei lassen sich geringe und mittlere Glanzeffekte auch bei mehrschichtigen Lackierungen gezielt einstellen. Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln insbesondere Kraftfahrzeuge, wie Motorräder, Busse, LKW oder PKW) oder Teilen hiervon. Insbesondere können die erfindungsgemäßen Beschichtungszusammensetzungen und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt, insbesondere auch in mehrstufigen Beschichtungsverfahren, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungszusammensetzung aufgetragen werden. Beispiele, die der Veranschaulichung der vorliegenden Erfindung dienen, sind nachstehend angegeben.

Es versteht sich, dass die Beschichtungszusammensetzungen die üblichen zur Formulierung eines Klarlacks eingesetzten Hilfsstoffe aufweisen, so dass in den Beispielen lediglich die enthaltenen Mattierungsmittel und Polyamid-Partikel aufgeführt sein können.

### Beispiel 1

Beschichtungszusammensetzung auf Basis organischer Lösemittel oder wasserbasiert, enthaltend mindestens ein Bindemittel (A) und optional mindestens ein Vernetzungsmittel (B) sowie:
a) 1 Gew.-% bis 5 Gew.-% Acematt® OK 412 (Degussa)
b) 1 Gew.-% bis 7 Gew.-% Deuteron® MK (Deuteron), und
c) 3 Gew.-% bis 12 Gew.-% Rilsan® D50 (Arkema),
jeweils bezogen auf das Gesamtgewicht der Beschichtungszusammensetzung.

Nach dem Aufbringen und Trocknen der Beschichtungszusammensetzung wurde ein Glanzgrad des erhaltenen Klarlacks im Bereich von 2 bis 15 Glanzeinheiten, gemessen in einem Winkel von 60° mit einem handelsüblichen Glanzgerät, bei einer Strukturierung der Oberfläche in einem Bereich von 30 µm bis 60 µm, gemessen. Bei einer Auftragung des erhaltenen Klarlacks in einer Schichtdicke von 50 µm konnten Ra-Werte (Ra - arithmetischer Mittenrauwert nach DIN EN ISO 4287:2010) zwischen 10 µm und 30 µm ermittelt werden. Bei einer Auftragung des erhaltenen Klarlacks in einer Schichtdicke von 35 µm konnten Ra-Werte (Ra - arithmetischer Mittenrauwert nach DIN EN ISO 4287:2010) zwischen 20 µm und 50 µm ermittelt werden.

### Beispiel 2

Beschichtungszusammensetzung auf Basis organischer Lösemittel oder wasserbasiert, enthaltend mindestens ein Bindemittel (A) und optional mindestens ein Vernetzungsmittel (B) sowie:
a) 1 Gew.-% bis 5 Gew.-% Acematt® OK 607 (Degussa)
b) 1 Gew.-% bis 7 Gew.-% Deuteron® MK (Deuteron), und
c) 3 Gew.-% bis 12 Gew.-% Rilsan® D60 (Arkema),
jeweils bezogen auf das Gesamtgewicht der Beschichtungszusammensetzung.

Nach dem Aufbringen und Trocknen der Beschichtungszusammensetzung wurde ein Glanzgrad des erhaltenen Klarlacks im Bereich von 2 bis 15 Glanzeinheiten, gemessen in einem Winkel von 60° mit einem handelsüblichen Glanzgerät, bei einer Strukturierung der Oberfläche in einem Bereich von 30 µm bis 60 µm, gemessen. Bei einer Auftragung des erhaltenen Klarlacks in einer Schichtdicke von 50 µm konnten Ra-Werte (Ra - arithmetischer Mittenrauwert nach DIN EN ISO 4287:2010) zwischen 10 µm und 30 µm ermittelt werden. Bei einer Auftragung des erhaltenen Klarlacks in einer Schichtdicke von 35 µm konnten Ra-Werte (Ra - arithmetischer Mittenrauwert nach DIN EN ISO 4287:2010) zwischen 20 µm und 50 µm ermittelt werden.

## Patentansprüche

1. Beschichtungszusammensetzung zur Herstellung mattierter Klarlacke für die Automobilindustrie auf Basis organischer Lösemittel oder wasserbasiert, enthaltend mindestens ein Bindemittel (A), optional mindestens ein Vernetzungsmittel (B), und mindestens ein Mattierungsmittel (M) auf Siliciumdioxid (SiO₂)-Basis, **dadurch gekennzeichnet, dass** die Beschichtungszusammensetzung eine Kombination
a) eines mit einem oder mehreren Wachsen oberflächenmodifizierten Mattierungsmittels auf Siliciumdioxid (SiO₂)-Basis, und
b) eines organischen Mattierungsmittels auf Harnstoff-Methanal Polymer-Basis enthält, und
c) Polyamid-Partikel.

2. Beschichtungszusammensetzung nach Anspruch 1, **dadurch gekennzeichnet, dass** das Mattierungsmittel auf Siliciumdioxid (SiO2)-Basis ein Mattierungsmittel auf Kieselsäure-Basis ist.

3. Beschichtungszusammensetzung nach Anspruch 1 oder 2, **dadurch gekennzeichnet, dass** die Beschichtungszusammensetzung das Mattierungsmittel auf Siliciumdioxid (SiO2)-Basis in einem Bereich von ≥ 1 Gew.-% bis ≤ 5 Gew.-%, bezogen auf das Gesamtgewicht der Beschichtungszusammensetzung, enthält.

4. Beschichtungszusammensetzung nach einem der vorherigen Ansprüche, **dadurch gekennzeichnet, dass** das organische Mattierungsmittel ein Methylendiaminomethylether-Polykondensat ist.

5. Beschichtungszusammensetzung nach einem der vorherigen Ansprüche, **dadurch gekennzeichnet, dass** die Beschichtungszusammensetzung das organische Mattierungsmittel auf Harnstoff-Methanal Polymer-Basis in einem Bereich von ≥ 1 Gew.-% bis ≤ 7 Gew.-%, bezogen auf das Gesamtgewicht der Beschichtungszusammensetzung, enthält.

6. Beschichtungszusammensetzung nach einem der vorherigen Ansprüche, **dadurch gekennzeichnet, dass** die Beschichtungszusammensetzung die Polyamid-Partikel in einem Bereich von ≥ 3 Gew.-% bis ≤ 12 Gew.-%, bezogen auf das Gesamtgewicht der Beschichtungszusammensetzung, enthält.

7. Beschichtungszusammensetzung nach einem der vorherigen Ansprüche, **dadurch gekennzeichnet, dass** die Beschichtungszusammensetzung Polyamid-Partikel mit einer mittleren Teilchengröße im Bereich von ≥ 20 um bis ≤ 60 um, angegeben als d50-Wert, aufweist.

8. Beschichtung, hergestellt durch Härtung einer Beschichtungszusammensetzung nach einem der vorherigen Ansprüche.

9. Beschichtung nach Anspruch 8, **dadurch gekennzeichnet, dass** die gehärtete Beschichtung eine Schichtdicke in einem Bereich von ≥ 45 µm bis ≤ 60 µm aufweist.

10. Klarlack für die Automobilserien-, Nutzfahrzeug- und/oder Reparaturlackierung und/oder zur Beschichtung von Karosserieinnen- und/oder -Außenbauteilen hergestellt durch Beschichtung mit einer Beschichtungszusammensetzung nach einem der vorherigen Ansprüche.

## Claims

1. A coating composition comprising for the production of matte clear coatings for the automotive industry organic solvent-based or water-based comprising at least one binder (A), optionally at least one crosslinking agent (B), and at least one silica-based (SiO₂) -based matting agent (M), **characterized in that** the coating composition comprises a combination of
a) a silica-based (SiO₂) -based matting agent surface-modified with one or more waxes, and
b) an organic matting agent based on a urea-methanal polymer, and
c) polyamide particles.

2. A coating composition according to claim 1, **characterized in that** the silica-based (SiO₂) -based matting agent is a matting agent based on silicic acid.

3. A coating composition according to claim 1 or 2, **characterized in that** the coating composition contains the matting agent based on (SiO₂) in a range between ≧1 weight-% and ≦5 weight-%, based on the total weight of the coating composition.

4. A coating composition according to one of the preceding claims, **characterized in that** the organic matting agent is a methylenediaminomethyl ether polycondensate.

5. A coating composition according to one of the preceding claims, **characterized in that** the coating composition contains the urea-methanal polymer-based organic matting agent in a range from ≥ 1% to ≤ 7% by weight, based on the total weight of the coating composition.

6. A coating composition according to one of the preceding claims, **characterized in that** the coating composition contains the polyamide particles in a range of ≥ 3 wt .-% to ≤ 12 wt .-%, based on the total weight of the coating composition.

7. A coating composition according to one of the preceding claims, **characterized in that** the coating composition contains the polyamide particles with a median particle size in the range of ≥ 20 µm to ≤ 60 µm, given as d50 value.

8. A coating prepared by curing of a coating composition according to one of the preceding claims.

9. Coating according to claim 8, **characterized in that** the cured coating has a layer thickness in a range of ≥ 45 µm to ≤ 60 µm.

10. Clearcoat for automotive OEM coatings, commercial vehicle coatings and / or refinish coatings and / or for coatings of interior and / or exterior automotive body components produced by coating with a coating composition according to one of the preceding claims.

## Revendications

1. Composition de revêtement à base de solvant organique ou à base d'eau comprenant au moins un liant (A), éventuellement au moins un agent de réticulation (B), et au moins un agent de matité à base de silice (SiO₂) (M), **caractérisée en ce que** la composition de revêtement comprend une combinaison contenant de
a) un agent de matité à base de silice (SiO₂) modifiée en surface avec une ou plusieurs cires, et
b) un agent de matité organique à base d'un polymère urée-méthanal et
c) des particules de polyamide.

2. Composition de revêtement selon la revendication 1, **caractérisée en ce que** l'agent de matité à base de silice (SiO₂) est un agent de matité à base d'acide silicique.

3. Composition de revêtement selon la revendication 1 ou 2, **caractérisée en ce que** la composition de revêtement contient l'agent de matité à base de silice (SiO₂) dans un intervalle compris entre ≥ 1% en poids et ≤ 5% en poids, sur la base du poids total de la composition de revêtement.

4. Composition de revêtement selon l'une des revendications précédentes, **caractérisée en ce que** l'agent de matité organique est un polycondensat de méthylènediaminométhyléther.

5. Composition de revêtement selon l'une des revendications précédentes, **caractérisée en ce que** la composition de revêtement contient l'agent de matité organique à base de polymère d'urée-méthanal dans une plage allant de ≥ 1% à ≤ 7% en poids, sur la base du poids total de la composition de revêtement.

6. Composition de revêtement selon l'une des revendications précédentes, **caractérisée en ce que** la composition de revêtement contient les particules de polyamide dans une plage allant de ≥ 3% en poids à ≤ 12% en poids, sur la base du poids total de la composition de revêtement.

7. Composition de revêtement selon l'une des revendications précédentes, **caractérisée en ce que** la composition de revêtement contient les particules de polyamide avec une taille de particules moyenne dans une plage allant de ≥ 20 µm à ≤ 60 µm, indiqués comme sa valeur d50.

8. Revêtement préparé en durcissant une composition de revêtement selon l'une e des revendications précédentes.

9. Revêtement selon la revendication 8, **caractérisé en ce que** le revêtement durci a une épaisseur de revêtement comprise entre ≥ 45 µm et ≤ 60 µm.

10. Revêtement transparent pour revêtement de carrosserie d'automobile, de véhicule utilitaire et / ou de retouches et / ou de revêtement de composants intérieurs et / ou extérieurs de carrosserie produits par revêtement avec une composition de revêtement selon l'une des revendications précédentes.
